# EUROPEAN PATENT APPLICATION

(11) **EP 3 984 962 A1**
(43) Date of publication of application: **20.04.2022**
(21) Application number: 20202076.4
(22) Date of filing: 15.10.2020
(51) Int. Cl.: C02F 1/32, C02F 1/00, C02F 103/00

(54) **A METHOD PERFORMED BY A CONTROL DEVICE FOR VERIFYING THE PERFORMANCE OF A UV-REACTOR, A CONTROL DEVICE, AND A UV-REACTOR**

(71) Applicant: AlfaWall Aktiebolag, 147 80 Tumba (SE)
(72) Inventor: SAHLÉN, Peter, 165 71 Hässelby (SE)
(74) Representative: Alfa Laval Attorneys

(57) **Abstract**

The invention relates to a method performed by a control device (100) for verifying the performance of a UV-reactor (4) for treating ballast water (14) in marine vessels (1), the UV-reactor (4) comprising: at least one UV-light source (28); at least one UV-light sensor (40); an inlet (24) and an outlet (26) for liquid (14, 16, 18); and the control device (100). The method comprising: controlling (s101) a cleaning process of the UV-reactor (4); controlling (s102) a flow of fresh water (16) into the UV-reactor (4) for filling the UV-reactor (4) with fresh water (16); recording (s103) a UV-intensity value from the at least one UV-light source (28) by the at least one UV-light sensor (40); comparing (s104) the recorded UV-intensity value with a setpoint UV-intensity value, the setpoint value being either a default value or is defined at commissioning of the UV-light source (28), and generating a user alert (s105), if the recorded UV-intensity value is lower than the setpoint value. The invention also relates to a control device (100) and a UV-reactor (4).

## Description

### TECHNICAL FIELD

The present disclosure relates to a method performed by a control device for verifying the performance of a UV-reactor for treating ballast water in marine vessels, a control device for verifying the performance of a UV-reactor for treating ballast water in marine vessels, and a UV-reactor comprising a control device. The present disclosure further relates to computer program and a computer-readable medium.

### BACKGROUND ART

UV-reactors on-board of marine vessels, such as ships, are arranged to prevent spreading species and organisms from one location to another in the seas over the world. Spreading the species and organisms from one location to another may affect delicate biological balance in the seas. The UV-reactors are comprised in a ballast water handling system, which also comprises ballast water tanks, filters, pumps etc. for handling the ballast water.

Ships are arranged with ballast water tanks that are filled in order to stabilize them when the ships are not fully loaded with cargo or trim the position of the vessel in the water because of fuel consumption or weather conditions. An example of an operation could be that, when a ship has offloaded its cargo at a port at a first location, and then receives instructions to pick up another cargo in a port at another location of the word, it fills its ballast water tanks with sea water from the first location. When the ship then reaches the port in the second location, it empties the ballast water tanks for receiving new cargo. Thus, the species that were in the water of the first location have been transported to the second location. The transported species from the first location may be completely different from the existing ambient species of the second location and may thus cause ecological problems. It is well known that species that are transported from their original environment to a new environment can cause large problems, for example due to that they have no normal enemies in the new environment, that the local species obtain diseases and are wiped out from the transported species, etc. Therefore, there are international conventions and regulations for commercial ships for how to handle ballast water.

Methods have been developed for purifying ballast water with UV-reactors that render organisms harmless. A photolytic and photo-catalytic process is used to decompose organisms in the ballast water, rendering them harmless, and for that purpose light with different wavelengths are used. The UV radiation in the UV-reactors is generated by UV lamps emitting certain wavelengths, which lamps are operated by drive units. The power of these lamps is high and requires a lot of power from the drive units, which in turn results in that they generate a lot of heat. The UV reactors and drive units are placed in pump rooms, engine rooms or in deckhouses or other suitable compartment provided with inlets and outlets for the ballast water to be treated.

Document US2009321365 A1 discloses a system of water treatment comprising a UV radiation means for treating contaminated ballast water.

### SUMMARY OF THE INVENTION

For treating ballast water in marine vessels, it is important that the ballasting and deballasting in connection with the treatment is performed such that it is ensured that no untreated water can leave the marine vessels, that the ballast water pumping equipment as well as the treatment equipment is controlled and monitored so that a safe and optimal function is obtained as well as being able to indicate malfunction of different parts of the system so that appropriate measures can be taken and also that the safety of the vessel is not endangered.

The UV-intensity of the UV lamps are degraded over time, which results in that the UV-reactor efficiency may degrade and will no longer effectively and sufficiently treat and clean the ballast water. When the UV-intensity from the UV lamps has been operated for a fixed number of hours, they must be replaced by new UV lamps.

The UV lamps are provided with protective quartz sleeves, which protects the UV lamps from the ballast water to be cleaned. Over time, also the optical efficiency of the protective quartz sleeves are degraded due to a scaling and solarization effect on the sleeves. The UV-reactor may also be provided with a UV-light sensor, which is configured to detect the UV-intensity generated by the UV-lamps. However, also the sensor may be degraded over time due to the solarization effect of filters in front of a photodiode of the sensor and due to scaling and solarization effect of a quartz glass of a sensor housing. If the UV-light sensor is activated and detects the UV-intensity with scaled and solarized protective quartz sleeves of the UV lamps and of the quartz glass of the sensor housing, the result of the detection may not be accurate.

There is thus a need for an improved method for verifying the optimal performance of a UV-reactor. There is also a need to develop an improved control device for verifying the optimal performance of a UV-reactor. There is also a need to develop a UV-reactor comprising such a control device and a computer program and a computer-readable medium for executing the method. There is also a need to develop UV-reactor, which may be autonomously controlled.

An objective of the invention is thus to provide an improved method for verifying the optimal performance of a UV-reactor. A further objective is to develop an improved control device for verifying the performance of a UV-reactor. Additional objectives are respectively to develop a UV-reactorcomprising such a control device, and a computer program and a computer-readable medium for executing the method. A further objective is to develop a UV-reactor, which may be autonomously controlled.

These objectives are achieved by a method performed by a control device for verifying the performance of a UV-reactor for treating ballast water in marine vessels, a control device for verifying the performance of a UV-reactor for treating ballast water in marine vessels, a UV-reactor, a computer program and a computer-readable medium according to the appended claims.

According to an aspect of the invention, a method performed by a control device for verifying the optimal performance of a UV-reactor for treating ballast water in marine vessels is provided. The UV-reactor comprising: at least one UV-light source; at least one UV-light sensor; an inlet and an outlet for liquid; and the control device. The method comprising: controlling a cleaning process of the UV-reactor; controlling a flow of fresh water into the UV-reactor for filling the UV-reactor with fresh water; recording a UV-intensity value from the at least one UV-light source by the at least one UV-light sensor, comparing the recorded UV-intensity value with a setpoint UV-intensity value, the setpoint value being either a default value or a value defined at commissioning of the UV-light source, and generating a user alert, if the recorded UV-intensity value is lower than the setpoint value.

This has the advantage that method steps for verifying the performance of the UV-reactor may be completely controlled by the control device. Controlling the cleaning process of the UV-reactor results in that dirt and scaling on sleeves, housings or other physical protection for the UV lamps and UV-light sensors are cleaned and removed before recording the UV-intensity from the UV lamps by the sensor. UV verification tests may be performed at intervals with a frequency depending on type and size of the UV-reactor, on the number of ballasting and deballasting the marine vessel and/or on the volume of ballast water to be treated. Filling the UV-reactor with fresh water by controlling a flow of technical fresh water with a high UV transmittance into the UV-reactor may increase the visibility within the UV-reactor. An increased visibility may result in a more accurate recording of the UV-intensity. The fresh water may be technical fresh water, which is cleaned from particles and substances which have a negative effect on the UV transmittance. The fresh water may be taken from the tap water system of the marine vessel or from an engine cooling system of the marine vessel. The cleaning and removing of dirt and scaling and also the increased visibility in the UV-reactor may result in an increased accuracy in the comparison between the recorded UV-intensity value and the setpoint UV-intensity value. The setpoint value being either a default value stored in the control device or is defined at commissioning of the UV-light source. The setpoint value at commissioning of the UV-light source may defined at installation of new UV lamps in the UV-reactor or at replacement of the UV lamps to new UV lamps. When the new UV lamps have been installed a cleaning cycle according to the method steps is performed and the recorded UV-intensity value is stored as a setpoint value in a memory of the control device. If the recorded UV-intensity value is lower than the setpoint value a user alert is generated. The alert may be an indication in a verifying protocol or an indication on a display. The user alert may be directed to an operator or to the control device as a part of an autonomous system. The operator or the control device may take appropriate decisions about how to proceed further. The objective to provide an improved method for verifying the performance of a UV-reactor is thus achieved.

According to an aspect of the invention, a computer program comprising instructions which, when the program is executed by a computer, cause the computer to carry out the method. A computer-readable medium comprising instructions, which when executed by a computer, cause the computer to carry out the method. This has the advantage that the method may be comprised in pre-programmed software, which may be implemented into the control device of the UV-reactor suitable for utilizing the method.

According to an aspect of the invention, a control device for verifying the performance of a UV-reactor for treating ballast water in marine vessels is provided. The UV-reactor comprises: at least one UV-light source; at least one UV-light sensor; an inlet and an outlet for liquid; and the control device. The control device being configured to: control a cleaning process of the UV-reactor; control a flow of fresh water into the UV-reactor for filling the UV-reactor with fresh water; record a UV-intensity value from the at least one UV-light source by the at least one UV-light sensor; compare the recorded UV-intensity value with a setpoint UV-intensity value, the setpoint value being either a default value or is defined at commissioning of the UV-light source, and generate a user alert, if the recorded UV-intensity value is lower than the setpoint value.

This has the advantage that verifying the performance of the UV-reactor may be completely controlled by the control device. The control device may thus receive information from the UV-reactor and send instructions to the UV-reactor. Thus, the control device is configured to control the cleaning process of the UV-reactor. The control device may thus control any components of the UV-reactor and any equipment connected to the UV-reactor, so that the cleaning process of the UV-reactor is performed, so that a flow of fresh water into the UV-reactor for filling the UV-reactor with fresh water is performed, so that the UV-intensity value from the at least one UV-light source by the at least one UV-light sensor is recorded, so that the recorded UV-intensity value is compared with a setpoint UV-intensity value, the setpoint value being either a default value or a value defined at commissioning of the UV-light source, and so that a user alert is generated, if the recorded UV-intensity value is lower than the setpoint value.

According to an aspect of the invention a UV-reactor is provided, the UV-reactor comprising: at least one UV-light source; at least one UV-light sensor; and an inlet and an outlet for liquid, wherein the UV-reactor comprises at least one control device disclosed herein.

Such UV-reactor will be reliable and treat the ballast water properly due to the method and the control device for verifying the its performance. The UV-reactor will be a part or component in a reliable ballast water handling system. The UV-reactor may have any configuration adapted to treat ballast water of a marine vessel. Thus, the size and capacity of the UV-reactor may be adapted to the size and capacity of the ballast water handling system of the marine vessel.

Further objectives, advantages and novel features of the present invention will become apparent to one skilled in the art from the following details, and also by putting the invention into practice. Whereas embodiments of the invention are described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present disclosure and further objectives and advantages of it, the detailed description set out below should be read together with the accompanying drawings, in which the same reference notations denote similar items in the various figures, and in which:
Fig. 1 illustrates a schematic side view of a marine vessel provided with ballast water handling system comprising a UV-reactor according to an example;
Fig. 2 illustrates a UV-reactor according to an example;
Fig. 3 shows a flowchart of a method according to an example; and
Fig. 4 schematically illustrates a control device or computer according to an embodiment.

### DETAILED DESCRIPTION

The detailed description with reference to the examples depicted are to be viewed as examples comprising a combination of certain features, which features have been described in detail above. It is thus to be understood that additional examples may be achieved by combining other features into examples not depicted herein. The figures are to be viewed as examples and not mutually exclusive combinations. It should also be noted that all figures shown and described are schematically represented, wherein generic parts of machinery or similar is not depicted for the sake of simplicity.

According to an aspect of the present disclosure, a method performed by a control device for verifying the performance of a UV-reactor for treating ballast water in marine vessels is provided. The UV-reactor comprises: at least one UV-light source; at least one UV-light sensor; an inlet and an outlet for liquid; and the control device. The method comprising: controlling a cleaning process of the UV-reactor; controlling a flow of fresh water into the UV-reactor for filling the UV-reactor with fresh water; recording a UV-intensity value from the at least one UV-light source by the at least one UV-light sensor, comparing the recorded UV-intensity value with a setpoint UV-intensity value, the setpoint value being either a default value or a value defined at commissioning of the UV-light source, and generating a user alert, if the recorded UV-intensity value is lower than the setpoint value.

A high performance of the UV-reactor in a ballast water treatment system may result in a proper treatment of the ballast water, but also a reduced power consumption or treatment at the maximum rated treatment capacity. It is therefore important to verify that the performance of the UV-reactor is high. The method according to the present disclosure will deliver a proper and accurate verification of the performance of the UV-reactor. The ballast water treatment system may comprise a number of UV-reactors, which are connected in parallel and/or in series in the system. The UV-reactor may comprise a reactor housing defining a space, which may accommodate the components and equipment needed for treating the ballast water. Such components and equipment may be the UV-light source and the UV sensor, both arranged in the space of reactor housing of the UV-reactor. The UV-light source may comprise a number of UV lamps arranged for treatment of the ballast water.

In the UV-reactor, the UV lamps irradiate UV light, which kills or render organism non-viable and harmless. The irradiated light may be in the range of 185 nm - 400 nm. Organisms present in the ballast water will be inactivated by the UV light and thus consequently will not pose a threat for an invasion once discharged. The UV light in the UV-reactor thus disinfect organisms while they reside in the UV-reactor. Treatment by UV irradiation will not generate any harmful by-products or residual disinfectants in the ballast water.

The UV-light sensor may comprise a photodiode connected to electronics, which are accommodated in a sensor housing. The sensor housing may comprise a quartz glass allowing light from the UV-light source to enter the sensor housing and reach the photodiode. A light filter may be arranged in front of the photodiode within the sensor housing. Light from the UV-light source may thus pass the filter before reaching the photodiode. The UV-light sensor may be connected to the control device for communicating with the control device. A number of UV-light sensors may be arranged within the UV-reactor.

The UV-reactor comprising an inlet and an outlet for liquid. The inlet and an outlet may be arranged in the reactor housing. Ballast water, fresh water and a cleaning liquid may enter the reactor housing through the inlet. Ballast water, fresh water and the cleaning liquid may flow out from the reactor housing through the outlet. An inlet valve may be connected to the inlet. The inlet valve may be configured to allow and to restrict the ballast water, fresh water and the cleaning liquid to/from flowing into the reactor housing. The inlet valve may be also be configured to regulate the flow rate of the ballast water, fresh water and the cleaning liquid through the inlet. An outlet valve may be connected to the outlet. The outlet valve may be configured to allow and to restrict the ballast water, fresh water and the cleaning liquid to/from flow out of the reactor housing. The outlet valve may be also be configured to regulate the flow rate of the ballast water, fresh water and the cleaning liquid through the outlet. The flow of ballast water, fresh water and the cleaning liquid may be generated by at least one pump connected to the UV-reactor.

The method according to the present disclosure is performed by a control device. The control device may be arranged on the UV-reactor or at a distance to the UV-reactor. The control device may comprise a memory in which information from the UV-reactor is stored. The control device may comprise a memory in which experience data may be stored. The control device may comprise calculation modules and filters for estimation of characteristics based on inputs and variables relating to the method of verifying the performance of the UV-reactor. The control device may be connected to additional sensors, which are arranged on the UV-reactor or at components connected to the UV-reactor. Such sensors may detect activities or characteristics of the UV-reactor or of the components connected to the UV-reactor. The control device may be configured to perform any method step of the method. The control device is configured to manage and control the verifying of the performance of the UV-reactor. The control device may be configured to send UV-reactor data to a remote database.

The marine vessel may be a boat, barge or a ship. Such boats, barges and ships may be cargo ships, oil tankers, passenger boats, ferries, military boats or similar.

The method step of controlling a cleaning process of the UV-reactor results in that dirt and scaling on sleeves, housings or other physical protection for the UV lamps and UV-light sensors are cleaned and removed. The method step of controlling a flow of fresh water into the UV-reactor for filling the UV-reactor with fresh water may increase the visibility within the UV-reactor due to a removed or at least partly removed volume of ballast water from the UV-reactor. The method step of recording a UV-intensity value from the at least one UV-light source by the at least one UV-light sensor may be performed during a predetermined period. The period may be long enough so that the UV-light sensor is capable to sense and detect the light from the UV-light source. As a result, the control unit can record the UV-intensity value. Dirt and scaling on sleeves, housings or other physical protection for the UV lamps and UV-light sensors have been removed before recording the UV-intensity from the UV lamps by the sensor. In addition, the visibility within the UV-reactor has been increased due to a removed or at least partly removed volume of ballast water from the UV-reactor by the fresh water. This may result in a more accurate recording of the UV-intensity. The cleaning and removing of dirt and scaling and also the increased visibility in the UV-reactor may result in an increased accuracy in the comparison between the recorded UV-intensity value and the setpoint UV-intensity value. The setpoint value being either a default value stored in the control device or is defined at commissioning of the UV-light source. The setpoint value at commissioning of the UV-light source may defined at installation of new UV lamps in the UV-reactor or at replacement of the UV lamps to new UV lamps. When the new UV lamps have been installed a cleaning cycle according to the method steps is performed and the recorded UV-intensity value is stored as a setpoint value in a memory of the control device. If the recorded UV-intensity value is lower than the setpoint value a user alert is generated. The alert may be an indication in a verifying protocol or an indication on a display. The user alert may be directed to an operator or to the control device as a part of an autonomous system. The operator or the control device may take appropriate decisions about how to proceed further. The objective to provide an improved method for verifying the performance of a UV-reactor is thus achieved.

The treatment of contaminated ballast water does only take place when the UV-reactor is fully functioning. Should one of the UV-light sources break down during operation, the control unit handles this situation and shuts down the UV-reactor. In addition, if the UV-reactor shuts down, an alarm is sent to an operator and/or a control center, in order to adjust the flow through the ballast water treatment system accordingly. These measures may also be logged, so that there is a treatment history of the system.

According to an aspect, controlling a cleaning process of the UV-reactor comprising controlling a draining flow of ballast water from the UV-reactor, controlling a flow of a cleaning liquid into the UV-reactor, and controlling a draining flow of the cleaning liquid from the UV-reactor.

During the cleaning process of the UV-reactor cleaning substances comprised in a cleaning liquid may be added to the UV-reactor, which removes the dirt and scaling.

After the reactors have been drained of ballast water, cleaning substances comprised in a cleaning liquid may be added to the UV-reactor, which removes the dirt and scaling. Each reactor may be cleaned separately or a number of reactors may be cleaned in parallel. The inlet and outlet valves of the reactor are opened and the pump for feeding the cleaning liquid is started. For a period of time the reactor is thus flushed with cleaning liquid from a cleaning liquid tank. Alternatively, the UV-reactor may be filled with the cleaning liquid and the cleaning liquid is enclosed in the UV-reactor for a period of time. The cleaning liquid could preferably have a low pH-value since the scaling relating from deposits on the on sleeves, housings or other physical protection for the UV lamps and UV-light sensors is basic. One example of a cleaning liquid comprises lactic whey and citric acid. The cleaning liquid may be reused in subsequent cleaning processes. However when a certain number of cleaning processes have been performed, the cleaning liquid contains so much deposit and other pollution so that it has to be replaced.

According to an aspect, controlling a cleaning process of the UV-reactor further comprising controlling of a flushing flow of fresh water through the UV-reactor for rinsing off any remaining cleaning liquid from the UV-reactor.

After the cleaning liquid has been drained from the UV-reactor, a small volume of cleaning liquid may remain in the reactor. Therefore, a flushing flow of fresh water through the UV-reactor for rinsing off any remaining cleaning liquid from the UV-reactor. The flushing flow of fresh water may also assist in removing any remaining scaling or dirt from the reactor. The fresh water may be taken from the tap water system of the marine vessel or from an engine cooling system of the marine vessel. This elevates the security that no contaminants may remain in the reactor. In that respect both tap water and cooling water of the marine vessel may be used. The fresh water used may be heated before treatment, which even further elevates the security and efficiency of the treatment.

According to an aspect, controlling a flow of fresh water into the UV-reactor for filling the UV-reactor with fresh water comprising detecting the level of fresh water in the UV-reactor and interrupting the flow of fresh water into the UV-reactor when the level of fresh water in the UV-reactor has reached a threshold level.

The pump is generating the flow of fresh water into the UV-reactor. The level of fresh water in the UV-reactor may be detected by a level sensor, which is connected to the control device. The level senor detects when the level of fresh water in the UV-reactor has reached the threshold level in the UV-reactor. The control device receives a signal from the level sensor that the threshold level has been reached. The control device interrupts the flow of fresh water into the UV-reactor by shutting down the pump and closing the inlet valve of the inlet of the reactor.

According to an aspect, recording a UV-intensity value from the at least one UV-light source by the at least one UV-light sensor comprising activating the UV-light source.

During cleaning of the UV-reactor, the UV-light source is turned off. This will reduce the electric power consumption and protect the UV-light source from overheating when the reactor has been drained from liquid. Thus, when the reactor is filled with fresh water, and the UV-intensity value from the at least one UV-light source should be recorded, the UV-light source is activated by turning the UV-light source on.

According to an aspect, recording a UV-intensity value from the at least one UV-light source by the at least one UV-light sensor comprising activating the UV-light source at different levels by supplying power at different levels to the UV-light source.

The power of the UV-light source may be adjusted to 50, 60, 70, 80, 90 and 100% by the operational power of the UV-light source. This may be used to determine variations in the UV-light source or in other items affecting the recording of the UV-intensity value from the UV-light source. Such items could be the distance between the UV-light source and the UV-light sensor. In addition, such items may be the characteristics of the fresh water.

According to an aspect, generating a user alert, if the recorded UV-intensity value is lower than the setpoint value comprises generating the user alert if the recorded UV-intensity value is below a threshold value, at which the performance of the least one UV-light source no longer is sufficient for the treatment of the ballast water.

If the UV-intensity value and the setpoint UV-intensity value is close to each other, the UV-intensity of the UV-light source has not been degraded. However, if the recorded UV-intensity value is below a threshold value the UV-intensity of the UV-light source has been degraded and the UV-light source is no longer optimal for the treatment of the ballast water. Then the user alert is generated. The user alert is generated by the control device.

According to an aspect, one or more of the method steps is/are performed by the control device by receiving instructions remotely from the location of the marine vessel. Additionally, or alternatively, the control device may be configured to send UV-reactor data to a remote database.

When the UV-reactor receives instructions remotely, it may be autonomously operated. This may result in that the control device of the UV-reactor is configured to receive commands and instructions from an off-board system, such as a remotely located control center which may include the remote database, and to execute these commands/instructions when verifying the performance of the UV-reactor and/or as a response to the verified performance of the UV-reactor. The autonomously operated UV-reactor may thus be said to be self-operated based on received commands and instructions from the control center. The autonomously operated UV-reactor may thus be self-operated without an operator on board the marine vessel. The control device may be adapted to convert the commands to control signals for controlling the systems and components of the UV-reactor and thereby control the verifying of the performance of the UV-reactor. Thus, the verifying the performance of the UV-reactor is self-cleaned based on the received commands and instructions. The control device may operate the UV-reactor autonomously also based on data from the at least one sensor, taking situations that may happen during verifying into account.

The present disclosure also relates to a computer program comprising instructions which, when the program is executed by a computer, causes the computer to carry out the method disclosed above. The invention further relates to a computer-readable medium comprising instructions, which when executed by a computer causes the computer to carry out the method disclosed above. The method may be comprised in pre-programmed software, which may be implemented into the drilling unit suitable for utilizing the method. The pre-programmed software may be stored in the control device. Alternatively, or in combination, the software may be stored in a memory or in computer at a distance from the control device.

Furthermore, the present disclosure relates to a control device for verifying the performance of a UV-reactor for treating ballast water in marine vessels is provided. The UV-reactor comprises: at least one UV-light source; at least one UV-light sensor; an inlet and an outlet for liquid; and the control device. The control device being configured to: control a cleaning process of the UV-reactor; control a flow of fresh water into the UV-reactor for filling the UV-reactor with fresh water; record a UV-intensity value from the at least one UV-light source by the at least one UV-light sensor; compare the recorded UV-intensity value with a setpoint UV-intensity value, the setpoint value being either a default value or is defined at commissioning of the UV-light source, and generate a user alert, if the recorded UV-intensity value is lower than the setpoint value.

The control device may thus receive information from the UV-reactor and send instructions to the UV-reactor. Thus, the control device is configured to control the cleaning process of the UV-reactor. The control device may thus control any components of the UV-reactor and any equipment connected to the UV-reactor, so that the cleaning process of the UV-reactor is performed, so that a flow of fresh water into the UV-reactor for filling the UV-reactor with fresh water is performed, so that the UV-intensity value from the at least one UV-light source by the at least one UV-light sensor is recorded, so that the recorded UV-intensity value is compared with a setpoint UV-intensity value, the setpoint value being either a default value or a value defined at commissioning of the UV-light source, and so that a user alert is generated, if the recorded UV-intensity value is lower than the setpoint value.

It will be appreciated that all the examples described for the method aspect of the disclosure performed by the control device are also applicable to the UV-reactor and the control device aspect of the disclosure. That is, the control device may be configured to perform any one of the steps of the method according to the various examples described above. Thus, according to the following aspects, the control device may be configured to perform the method steps according to the corresponding examples described above.

According to an aspect, the control device may thus be configured to control a draining flow of ballast water from the UV-reactor, control a flow of a cleaning liquid into the UV-reactor, and to control a draining flow of the cleaning liquid from the UV-reactor. According to a further aspect, the control device is configured to control a flushing flow of fresh water through the UV-reactor for rinsing off any remaining cleaning liquid from the UV-reactor. According to a further aspect the control device is configured to detect the level of fresh water in the UV-reactor and to interrupt the flow of fresh water into the UV-reactor when the level of fresh water in the UV-reactor has reached a threshold level. According to a further aspect, the control device is configured to activate the UV-light source. According to a further aspect, the control device is configured to activate the UV-light source at different levels by supplying power at different levels to the UV-light source. According to a further aspect, the control device is configured to generate the user alert if the recorded UV-intensity value is below a threshold value, at which the performance of the least one UV-light source no longer is sufficient for the treatment of the ballast water. According to a further aspect, the control device is configured to receive instructions remotely from the location of the marine vessel.

The control device may be implemented as a separate entity or distributed in two or more physical entities. The control device may comprise one or more computers. The control device may thus be implemented or realised by the control device comprising a processor and a memory, the memory comprising instructions, which when executed by the processor causes the control device to perform the herein disclosed method.

Furthermore, the present disclosure relates to a UV-reactor comprising: at least one UV-light source; at least one UV-light sensor; and an inlet and an outlet for liquid. The UV-reactor comprises at least one control device disclosed herein.

Such UV-reactor will be reliable and treat the ballast water properly due to the method and the control device for verifying the its performance. The UV-reactor will be a part or component in a reliable ballast water handling system. The UV-reactor may have any configuration adapted to treat ballast water of a marine vessel. Thus, the size and capacity of the UV-reactor may be adapted to the size and capacity of the ballast water handling system of the marine vessel.

The present invention will now be further illustrated with reference to the appended figures.

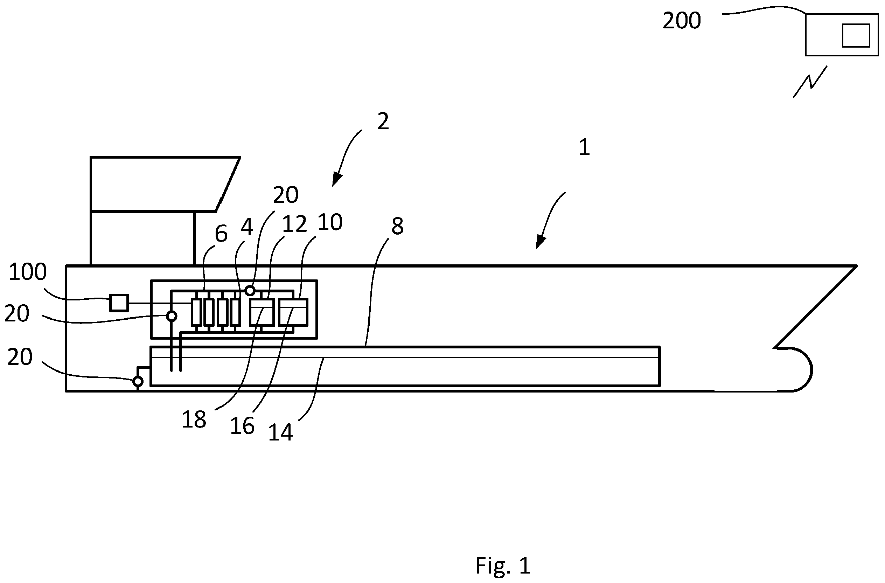

Fig. 1 illustrates a schematic side view of a marine vessel 1 provided with ballast water handling system 2 comprising a UV-reactor 4 according to an example. The marine vessel 1 according to the example is a ship. The ballast water handling system 2 comprising a number of UV-reactors 4 arranged in parallel and connected to a pipe system 6. The UV-reactors 4 are connected to a ballast water tank 8. Further, the UV-reactors 4 are connected to a fresh water tank 10 and a cleaning liquid tank 12 by the pipe system 6. The ballast water tank 8 is filled with ballast water 14, the fresh water tank 10 is filled with fresh water 16 and the cleaning liquid tank 12 is filled with cleaning liquid 18. Pumps 20 are arranged in the ballast water handling system 2 for pumping ballast water 14, fresh water 16 and cleaning liquid 18. The ballast water handling system 2 is connected to a control device 100. The UV-reactor 4 and the ballast water handling system 2 may be autonomously operated, which results in that the control device 100 of the UV-reactor 4 and the ballast water handling system 2 is configured to receive commands and instructions from an off-board system, such as the control center 200. The control center may be located on another marine vessel, on land or on a satellite station. The control device 100 may be configured to send UV-reactor data to a remote database, which may be arranged in connection with the control center 200.

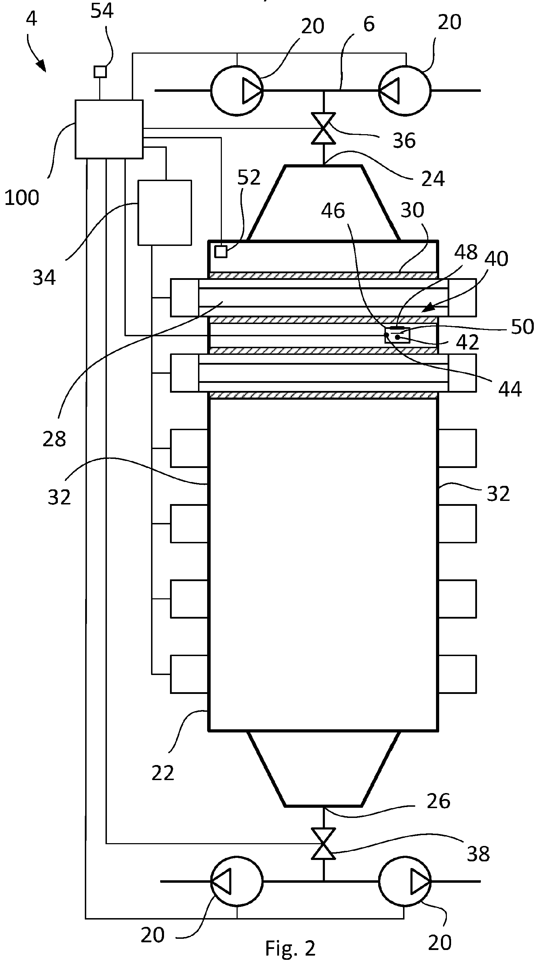

Fig. 2 illustrates a UV-reactor 4 according to an example. The UV-reactor 4 comprises a reactor housing 22 configured as an elongated enclosure with an inlet 24 and an outlet 26 at each end of the reactor housing 22. The flowing direction of ballast water 14, fresh water 16 and cleaning liquid 18 (fig. 1) in the reactor housing 22 is in the direction of the reactor housing 22 between the inlet 24 and the outlet 26. In the reactor housing 22 a number of UV-light sources 28 are arranged in elongated tubes 30 of quartz glass, which extend between the opposite walls 32 of the reactor housing 22. The UV-light sources 28 are connected to a power supply 34. The power supply 34 is controlled by the control device 100. The pipe system 6 is connected to the inlet 24 and outlet 26. An inlet valve 36 is connected to the inlet 24. An outlet valve 38 is connected to the outlet 26. The inlet valve 36 and the outlet valve 38 are connected to the control device 100. The pumps 20 are connected to the pipe system 6. The pumps 20 are connected to the control device 100. An UV-light sensor 40 arranged in the UV-reactor 4 is connected to the control device 100. The UV-light sensor 40 comprises a photodiode 42 connected to electronics 44, which are accommodated in a sensor housing 46. The sensor housing 46 comprises a quartz glass 48 allowing light from the UV-light source 28 to enter the sensor housing 46 and to reach the photodiode 42. A light filter 50 is arranged in front of the photodiode 42 within the sensor housing 46. A level sensor 52 arranged in the UV-reactor 4 is connected to the control device 100. A visual alarm and/or sound alarm arrangement 54 configured to generate a user alert is connected to the control device 100.

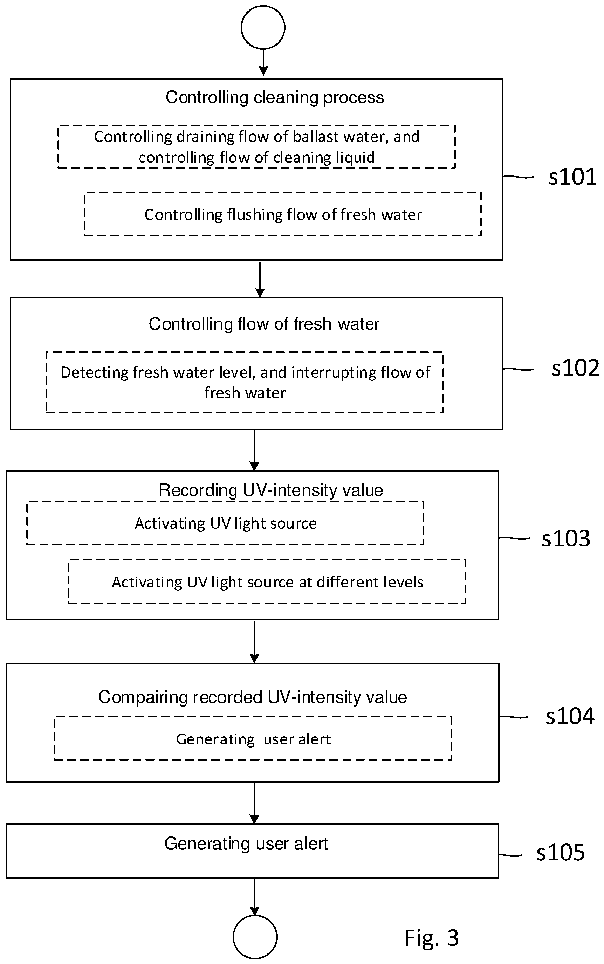

Fig. 3 shows a flowchart of a method according to an example. The method is performed by a control device 100 for verifying the performance of a UV-reactor 4 for treating ballast water 14 in marine vessels 1. The method thus relates to verifying the performance of a UV-reactor 4 for treating ballast water 14 in a marine vessel 1 disclosed in figures 1 and 2. The UV-reactor 4 comprising: at least one UV-light source 28; at least one UV-light sensor 40; an inlet 24 and an outlet 26 for liquid 14, 16, 18; and the control device 100.

The method comprises: controlling s101 a cleaning process of the UV-reactor 4; controlling s102 a flow of fresh water 16 into the UV-reactor 4 for filling the UV-reactor 4 with fresh water 16; recording s103 a UV-intensity value from the at least one UV-light source 28 by the at least one UV-light sensor 40, comparing s104 the recorded UV-intensity value with a setpoint UV-intensity value, the setpoint value being either a default value or a value defined at commissioning of the UV-light source 28, and generating a user alert s105, if the recorded UV-intensity value is lower than the setpoint value.

According to an aspect, controlling s101 a cleaning process of the UV-reactor 4 comprising controlling a draining flow of ballast water 14 from the UV-reactor 4, controlling a flow of a cleaning liquid 18 into the UV-reactor 4, and controlling a draining flow of the cleaning liquid 18 from the UV-reactor 4.

According to an aspect, controlling s101 a cleaning process of the UV-reactor 4 further comprising controlling of a flushing flow of fresh water 16 through the UV-reactor 4 for rinsing off any remaining cleaning liquid 18 from the UV-reactor 4.

According to an aspect, controlling s102 a flow of fresh water 16 into the UV-reactor 4 for filling the UV-reactor 4 with fresh water 16 comprising detecting the level of fresh water 16 in the UV-reactor 4 and interrupting the flow of fresh water 16 into the UV-reactor when the level of fresh water 16 in the UV-reactor 4 has reached a threshold level.

According to an aspect, recording s103 a UV-intensity value from the at least one UV-light source 28 by the at least one UV-light sensor 40 comprising activating the UV-light source 28.

According to an aspect, recording s103 a UV-intensity value from the at least one UV-light source 28 by the at least one UV-light sensor 40 comprising activating the UV-light source 28 at different levels by supplying power at different levels to the UV-light source 28.

According to an aspect, generating a user alert (s105), if the recorded UV-intensity value is lower than the setpoint value comprises generating the user alert if the recorded UV-intensity value is below a threshold value, at which the performance of the least one UV-light source 28 no longer is sufficient for the treatment of the ballast water 14.

According to an aspect, one or more of the method steps s101-s105 is/are performed by the control device 100 by receiving instructions remotely from the location of the marine vessel 1.

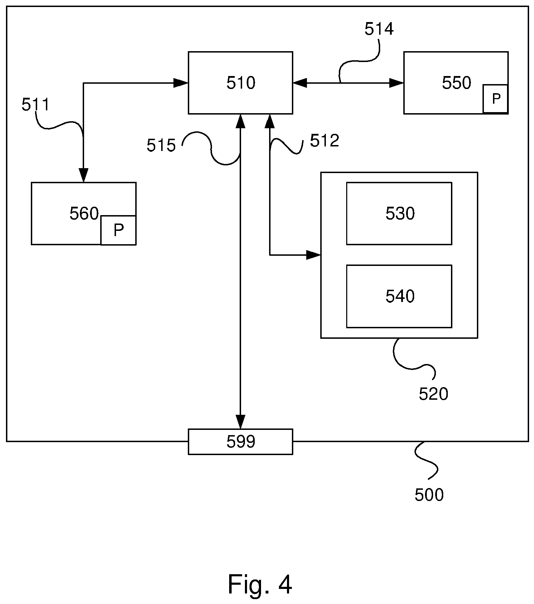

Figure 4 is a diagram of a version of a device 500. The control device 100 described with reference to fig. 1 and fig. 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer programme P which comprises routines for verifying the performance of a UV-reactor 4 for treating ballast water 14 in marine vessels 1. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514.

When data are received on the data port 599, they are stored temporarily in the second memory element 540. When input data received have been temporarily stored, the data processing unit 510 is prepared to effect code execution as described above.

Parts of the methods herein described may be effected by the device 500 by means of the data processing unit 510 which runs the programme stored in the memory 560 or the read/write memory 550. When the device 500 runs the programme, methods herein described are executed.

The foregoing description of the embodiments has been furnished for illustrative and descriptive purposes. It is not intended to be exhaustive, or to limit the embodiments to the variations described. Many modifications and variations will obviously be apparent to one skilled in the art. The embodiments have been chosen and described in order to best explicate principles and practical applications, and to thereby enable one skilled in the arts to understand the invention in terms of its various embodiments and with the various modifications that are applicable to its intended use. The components and features specified above may, within the framework of the disclosure, be combined between different embodiments specified.

## Claims

1. A method performed by a control device (100) for verifying the performance of a UV-reactor (4) for treating ballast water (14) in marine vessels (1), the UV-reactor (4) comprising:
at least one UV-light source (28);
at least one UV-light sensor (40);
an inlet (24) and an outlet (26) for liquid (14, 16, 18); and
the control device (100),
the method comprising:
controlling (s101) a cleaning process of the UV-reactor (4);
controlling (s102) a flow of fresh water (16) into the UV-reactor (4) for filling the UV-reactor (4) with fresh water (16);
recording (s103) a UV-intensity value from the at least one UV-light source (28) by the at least one UV-light sensor (40);
comparing (s104) the recorded UV-intensity value with a setpoint UV-intensity value, the setpoint value being either a default value or a value defined at commissioning of the UV-light source (28), and
generating a user alert (s105), if the recorded UV-intensity value is lower than the setpoint value.

2. The method according to claim 1, wherein controlling (s101) a cleaning process of the UV-reactor (4) comprises controlling a draining flow of ballast water (14) from the UV-reactor (4), controlling a flow of a cleaning liquid (18) into the UV-reactor (4), and controlling a draining flow of the cleaning liquid (18) from the UV-reactor (4).

3. The method according to any one of claims 1 and 2, wherein recording (s103) a UV-intensity value from the at least one UV-light source (28) by the at least one UV-light sensor (40) comprises activating the UV-light source (28).

4. The method according to any one of the preceding claims, wherein generating a user alert (s105), if the recorded UV-intensity value is lower than the setpoint value, comprises generating the user alert if the recorded UV-intensity value is below a threshold value, at which the performance of the least one UV-light source (28) no longer is sufficient for the treatment of the ballast water (14).

5. The method according to any one of the preceding claims, wherein one or more of the method steps (s101-s105) is/are performed by the control device (100) by receiving instructions remotely from the location of the marine vessel (1).

6. The method according to any one of the preceding claims, wherein the method further comprises sending UV-reactor operation data to a remote database.

7. A computer program (P) comprising instructions which, when the program (P) is executed by a computer (100; 500), cause the computer (100; 500) to carry out the method according to any one of the preceding claims.

8. A computer-readable medium comprising instructions, which when executed by a computer (100; 500), cause the computer (100; 500) to carry out the method according to any one of claims 1-6.

9. A control device (100) for verifying the performance of a UV-reactor for treating ballast water (14) in marine vessels (1), the UV-reactor (6) comprising:
at least one UV-light source (28);
at least one UV-light sensor (40);
an inlet (24) and an outlet (26) for liquid (14, 16, 18); and
the control device (100),
the control device (100) being configured to:
control a cleaning process of the UV-reactor (4);
control a flow of fresh water (16) into the UV-reactor (4) for filling the UV-reactor (4) with fresh water (16);
record a UV-intensity value from the at least one UV-light source (28) by the at least one UV-light sensor (40);
compare the recorded UV-intensity value with a setpoint UV-intensity value, the setpoint value being either a default value or a value defined at commissioning of the UV-light source (28), and
generate a user alert, if the recorded UV-intensity value is lower than the setpoint value.

10. The control device (100) according to claim 9, wherein the control device (100) is configured to control a draining flow of ballast water (14) from the UV-reactor (4), to control a flow of a cleaning liquid (18) into the UV-reactor (4), and to control a draining flow of the cleaning liquid (18) from the UV-reactor (4).

11. The control device (100) according to any one of claims 9 and 10, wherein the control device (100) is configured to activate the UV-light source (28).

12. The control device (100) according to any one of claims 9 - 11, wherein the control device (100) is configured to generate the user alert if the recorded UV-intensity value is below a threshold value, at which the performance of the least one UV-light source (28) no longer is sufficient for the treatment of the ballast water (14).

13. The control device (100) according to any one of claims 9 - 12, wherein the control device (100) is configured to receive instructions remotely from the location of the marine vessel (1).

14. The control device (100) according to any one of claims 9 - 13, wherein the control device (100) is configured to send UV-reactor data to a remote database.

15. A UV-reactor (4) comprising:
at least one UV-light source (28);
at least one UV-light sensor (40);
an inlet (24) and an outlet (26) for liquid (14, 16, 18), wherein the UV-reactor (4) comprises at least one control device (100) according to any one of claims 9 - 14.
